# EUROPEAN PATENT APPLICATION

(11) **EP 4 044 198 A1**
(43) Date of publication of application: **17.08.2022**
(21) Application number: 19945629.4
(22) Date of filing: 02.12.2019
(51) Int. Cl.: G21C 19/02, G21C 19/06

(54) **SPENT FUEL ASSEMBLY UNCOVERING AND RECYCLING SYSTEM AND METHOD**

(30) Priority: 16.09.2019 CN 201910869206
(71) Applicant: China Nuclear Power Engineering Co., Ltd., Shenzhen, Guangdong 518124 (CN); China Nuclear Power Design Company Ltd. (Shenzhen), Shenzhen, Guangdong 518100 (CN); China General Nuclear Power Corporation, Shenzhen, Guangdong 518026 (CN); CGN Power Co., Ltd., Shenzhen, Guangdong 518026 (CN)
(72) Inventor: CHENG, Cheng, Shenzhen, Guangdong 518100 (CN); ZHANG, Xueling, Shenzhen, Guangdong 518100 (CN); LI, Maoyun, Shenzhen, Guangdong 518100 (CN)
(74) Representative: Greaves Brewster LLP
(86) International application number: PCT/CN2019/122418
(87) International publication number: WO 2021/051659

(57) **Abstract**

The present invention provides a spent fuel assembly uncovering and recycling system and method suitable for a spent fuel storage tank (1) storing a spent fuel assembly. The spent fuel assembly uncovering and recycling system includes a helium leakage and cladding damage detection assembly (100) connected to the spent fuel storage tank (1) for controllably detecting a weld joint sealing condition of a cover assembly of the spent fuel storage tank (1) and a cladding damage condition of the spent fuel assembly in the spent fuel storage tank (1), respectively; a water filling and exhausting assembly (200) connected to the spent fuel storage tank (1) for controllably injecting water into the spent fuel assembly for cooling and exhausting gas in the spent fuel storage tank (1); and a cutting assembly (300) for controllably cutting a cover assembly weld joint of the spent fuel storage tank (1) to recycle the spent fuel assembly in the spent fuel storage tank (1). The present invention can realize safe recycling of the spent fuel assembly in a weld sealed storage tank.

## Description

### FIELD OF THE INVENTION

The present invention generally belongs to the technical field of spent fuel assembly recycling, and more particularly, relates to a spent fuel assembly uncovering and recycling system and method.

### BACKGROUND OF THE INVENTION

At present, the widely used concrete dry storage equipment for spent fuel in the world includes two independent parts, one is a metal spent fuel storage tank for receiving the spent fuel, and the other is a concrete silo placed outside the storage tank to undertake structure and shield protection functional. There is an air flow channel between the two parts, and the decay heat is passively discharged through natural ventilation.

The spent fuel storage tank in the prior art is a cylindrical thin-walled metal container, which is filled with inert protective gas after being evacuated and dried, to realize long-term storage of spent fuel assemblies, and most spent fuel storage tanks are weld sealed storage tanks. Although the weld sealed storage tank can meet the storage requirements of the spent fuel, considering the influence of the external environment and internal long-term exposure to high temperature and high radiation environment within the design life range, the aging and degradation of the weld joint may lead to seal leakage, and the fuel cladding may also break and releases dangerous fission gases. For countries adopting a closed nuclear fuel cycle, it is necessary to ensure that the spent fuel assemblies can be safely recovered and utilized after long-term storage. However, at present, there is no engineering practice and experience for recycling and utilizing the spent fuel assemblies.

In view of the above, what is needed, therefore, is to provide a spent fuel assembly uncovering and recycling system and method, to solve the technical problem that there is no engineering practice and experience for recycling and utilizing the spent fuel assemblies in the prior art.

### SUMMARY OF THE INVENTION

One object of the present invention is to provide a spent fuel assembly uncovering and recycling system and method, to solve the technical problem that there is no engineering practice and experience for recycling and utilizing the spent fuel assemblies in the prior art.

According to one embodiment of the present invention, a spent fuel assembly uncovering and recycling system, suitable for a spent fuel storage tank storing a spent fuel assembly, includes a helium leakage and cladding damage detection assembly, connected to the spent fuel storage tank, for controllably detecting a weld joint sealing condition of a cover assembly of the spent fuel storage tank and a cladding damage condition of the spent fuel assembly in the spent fuel storage tank, respectively; a water filling and exhausting assembly, connected to the spent fuel storage tank, for controllably injecting water into the spent fuel assembly for cooling and exhausting gas in the spent fuel storage tank; and a cutting assembly, for controllably cutting a cover assembly weld joint of the spent fuel storage tank to recycle the spent fuel assembly in the spent fuel storage tank.

According to one embodiment of the present invention, the spent fuel assembly uncovering and recycling system further includes: a control unit, connected to the helium leakage and cladding damage detection assembly, the water filling and exhausting assembly and the cutting assembly respectivelly, for controlling opening and closing of the helium leakage and cladding damage detection assembly, the water filling and exhausting assembly and the cutting assembly.

According to one embodiment of the present invention, the helium leakage and cladding damage detection assembly includes a main detection pipeline, a first detection pipeline and a second detection pipeline. One end of the main detection pipeline is connected to the spent fuel storage tank, the other end of the main detection pipeline is connected to the first detection pipeline and the second detection pipeline, resepectively. The main detection pipeline, the first detection pipeline and the second detection pipeline are configured for transferring leaked gas from the spent fuel storage tank. The main detection pipeline is provided with a first valve, the first valve is connected to the control unit for opening and closing under the control of the control unit. The first detection pipeline is provided with a helium leakage detection module for detecting helium leakage of the spent fuel storage tank, to detect sealing performance of the cover assembly weld joint of the spent fuel storage tank. The second detection pipeline is provided with a cladding damage detection module for sampling the leaked gas from the spent fuel storage tank, to detect cladding damage of the spent fuel assembly.

According to one embodiment of the present invention, one end of the main detection pipeline close to the spent fuel storage tank is provided with a blocking cover, to prevent gas leakage.

According to one embodiment of the present invention, the helium leakage detection module includes: a second valve and a helium leakage detector in communication with each other.One end of the second valve is communicated with the first valve for controlling opending and closing of the first detection pipeline. The helium leakage detector is connected to the other end of the second valve to detect helium leakage from the spent fuel storage tank and test the sealing performance of the cover assembly weld joint of the spent fuel storage tank. The control unit is connected to the second valve and the helium leakage detector for controlling opening and closing of the second valve and the helium leakage detector.

According to one embodiment of the present invention, the cladding damage detection module includes a third valve and a cladding damage sampling cartridge in communication with each other. One end of the third valve is communicated with the first valve to control opending and closing of the second detection pipeline. The cladding damage sampling cartridge is connected to the other end of the third valve for sampling the gas leaked from the spent fuel storage tank and detecting the cladding damage of the spent fuel assembly. The control unit is connected to the third valve and the cladding damage sampling cartridge, to control opening and closing of the third valve and the cladding damage sampling cartridge.

According to one embodiment of the present invention, the cladding damage detection module further includes: a fourth valve, a quick connector, a fifth valve and a high efficiency adsorption filter. The fourth valve and the quick connector are sequentially connected between the third valve and the cladding damage sampling cartridge, to control quick disconnection of the cladding damage sampling cartridge after sampling. The fifth valve is connected between the cladding damage sampling cartridge and the high efficiency adsorption filter, to control a flow of gas in the cladding damage sampling cartridge. The high efficiency adsorption filter is configured for connecting with one end of the quick connector afar from the fourth valve after the cladding damage sampling cartridge detects that the spent fuel assembly is damaged, to purify gas leaked from the spent fuel storage tank. The control unit is connected with the fourth valve, the quick connector, the fifth valve and the high efficiency adsorption filter, for controlling opening and closing of the fourth valve, the quick connector, the fifth valve and the high efficiency adsorption filter.

According to one embodiment of the present invention, the cladding damage detection module further includes a vacuum pump and a pressure detector. The vacuum pump is connected between the cladding damage sampling cartridge and the high efficiency adsorption filter, for sampling gas in the second detection pipeline. The pressure detector is connected between the third valve and the fourth valve, for detecting a pressure state of the second detection pipeline. The control unit is connected with the vacuum pump and the pressure detector, for controlling opening and closing of the vacuum pump and the pressure detector.

According to one embodiment of the present invention, the water filling and exhausting assembly indues a water filling module and an exhausting module. The water filling module is connected to the spent fuel storage tank to inject boron-containing water into the spent fuel storage tank. The exhausting module is connected to the spent fuel storage tank, to make the boron-containing water in the spent fuel storage tank flash evaporated into water vapor after being heated to be exhausted.

According to one embodiment of the present invention, the water filling module includes a water pump and a sixth valve. Two ends of the sixth valve are respectively communicated with the water pump and the drainage hole quick connector. One end of the water pump afar from the sixth valve is communicated with the boron-containing water source to inject boron-containing water into the spent fuel storage tank. The control unit is connected to the water pump and the sixth valve, to control opening and closing of the water pump and the sixth valve.

According to one embodiment of the present invention, the exhausting module includes a condensation tank, a suction pipeline valve, a first exhaust pipeline valve and a second exhaust pipeline valve. The first exhaust pipeline valve communicates with a top of the condensation tank, the second exhaust pipeline valve communicates with a bottom of the condensation tank tank, and the condensation tank is communicated with an inflatable hole quick connector through the suction pipeline valve, so that the boron-containing water in the spent fuel storage tank is heated and flashed into water vapor and further discharged to the condensation tank, Part of the water vapor condensed by the condensation tank is discharged from the top of the condensation tank through the first exhaust pipeline valve, and the other part of the water vapor condensed by the condensation tank is discharged from the bottom of the condensation tank through the second exhaust pipeline valve. The control unit is connected with the condensation tank, the suction pipeline valve, the first exhaust pipeline valveand the second exhaust pipeline valve for controlling opening and closing of the condensation tank. The suction pipeline valve, the first exhaust pipeline valve and the second exhaust pipeline valve.

According to another embodiment of the present invention, a spent fuel assembly uncovering and recycling method includes the steps of: Step 1: detecting a weld joint sealing condition of a cover assembly of a spent fuel storage tank and a cladding damage condition of the spent fuel assembly in the spent fuel storage tank, and purifying the leaked gas; Step 2: connecting the purified spent fuel storage tank with a water filling module and an exhausting module, to inject water to the spent fuel assembly for cooling and discharge gas from the spent fuel storage tank; and Step 3: cutting weld joints of an outer cover and an inner cover in sequence, removing the outer cover and the inner cover, and recycling the spent fuel assembly in the spent fuel storage tank.

According to one embodiment of the present invention, Step 1 includes the steps of: Step 11: detecting leakage of the weld joint of the inner cover, the air hole cover or the drainage hole cover, and cutting and removing the air hole cover and drainage hole cover hole cover if there is leakage, otherwise, going directly to Step 12; Step 12: detecting leakage of the quick connector and cutting and removing the air hole cover and the drainage hole cover if there is a leakage; otherwise, going directly to Step 13; Step 13: detecting leakage of the drainage hole quick connector, and cutting and removing the drainage hole cover and the air hole cover if there is a leakage; otherwise, going directly to Step 14; and Step 14: detecting leakage of the spent fuel assembly cladding and purifying the gas leaked after the damage if there is a leakage; otherwise, going directly to Step S2.

According to one embodiment of the present invention, Step 11 includes: Step 111: drilling small-sized holes on the outer cover as test holes; Step 112: placing one end of the first valve in the test hole, temporarily blocking the test hole via industrial adhesives or other glue materials; starting the helium leakage detector, opening the first valve and the second valve, and detecting whether there is helium in the gas in the test hole through the helium leakage detector, to detect the leakage of the weld joint of the inner cover, the air hole cover or the drainage hole cover and going directly to Step 113 if there is a leakage; otherwise, going directly to Step 12; Step 113: closing the first valve, the second valve and the helium leakage detector, opening the third valve and the first valve in sequence, sampling the gas in the test hole through the cladding damage sampling cartridge to detect cladding damage of the spent fuel assembly; closing the first valve and the third valve, and disconnecting the connection between the cladding damage sampling cartridge and the quick connector after sampling; going to step 114 if there is damage; otherwise, going directly to step 115; Step 114: connecting the high efficiency adsorption filter with the quick connector, to purify the gas extracted from the test hole; Step 115: drilling large-sized holes on the outer cover to completely expose and cut and remove the air hole cover plate and the drainage hole cover.

According to one embodiment of the present invention, Step 12 includes: Step 121: drilling large-sized holes on the outer cover to completely expose the air hole cover and the drainage hole cover, and drilling small-sized holes on air hole cover as test holes; Step 122: placing one end of the first valve in the test hole, and temporarily blocking the test hole via industrial adhesives or other glue materials; starting the helium leakage detector, opening the first valve and the second valve; detecting whether there is helium in the gas in the test hole through the helium leakage detector, to determine the leakage of the inflatable hole quick connector; if there is leakage, going to Step 123; otherwise, going directly to Step 13; Step 123: closing the first valve, the second valve and the helium leakage detector, opening the third valve and the first valve in sequence, sampling the gas in the test hole through the cladding damage sampling cartridge to detect the damage of the spent fuel cladding; after sampling, closing the first valve and the third valve, and disconnecting the connection between the cladding damage sampling cartridge and the quick connector; if there is damage, going to step 124; otherwise, going directly to step 125; Step 124: connecting the high efficiency adsorption filter with the quick connector to purify the gas extracted from the test hole; and Step 125: cutting and removing the air hole cover and the drainage hole cover.

According to one embodiment of the present invention, Step 13 includes: Step 131: drilling holes on the drainage hole cover as a test hole; Step 132: placing one end of the first valve in the test hole, and temporarily blocking the test hole via industrial adhesives or other adhesive materials; starting the helium leakage detector, opening the first valve and the second valve, and detecting whether there is helium in the gas in the test hole through the helium leakage detector, to determine the leakage of the drainage hole quick connector; if there is leakage, going to Step 133; otherwise, going directly to Step 14; Step 133: closing the first valve, the second valve and the helium leakage detector, opening the third valve and the first valve in sequence, sampling the gas in the test hole through the cladding damage sampling cartridge to detect the damage of the spent fuel cladding; after sampling, closing the first valve and the third valve, and disconnecting the connection between the cladding damage sampling cartridge and the quick connector; if there is damage, going to Step 134; otherwise, going directly to Step 135; Step 134: connecting the high efficiency adsorption filter with the quick connector to purify the gas extracted from the test hole; and Step 135: cutting and removing the air hole cover and the drainage hole cover.

According to one embodiment of the present invention, Step 14 includes: Step 141: using the inflatable hole quick connector as the test hole; Step 142: placing one end of the first valve in the test hole; opening the third valve and the first valve in sequence, and sampling the gas in the test hole through the cladding damage sampling cartridge, to detect the damage of the spent fuel cladding; after sampling, closing the first valve and the third valve, and disconnecting the connection between the cladding damage sampling cartridge and the quick connector; if there is damage, going to Step 143; otherwise, going directly to Step 2; and Step 143: connecting the high efficiency adsorption filter with the quick connector to purify the gas extracted from the test hole.

According to one embodiment of the present invention, Step 2 includes: connecting the water filling module with the drainage hole quick connector to ineject boron-containing water into the spent fuel storage tank; connecting the exhausting module with the inflatable hole quick connector, to make the boron-containing water in the spent fuel storage tank heated and flashed into water vapor and further condensed and discharged from the inflatable hole quick connector.

Compared with the prior art, the present invention provides a spent fuel assembly uncovering and recycling system and method to solve the technical problem that the spent fuel assembly is not recycled and utilized in the prior art. The spent fuel assembly uncovering and recycling system and method of the present invention comprehensively considers the leakage of the inner cover, the air hole cover, the drainage hole cover, the inflatable hole quick connector, as well as the damage of the spent fuel assembly, and provides a safe and reliable uncovering and recycling solution. During the short-term operation, loading, transfer and long-term storage of the spent fuel, if equipment failure, human events or other events causes the cladding temperature to exceed the safety benchmark, the storage tank can be safely cut to recycle the spent fuel assemblies. The spent fuel assembly uncovering and recycling system and method of the present invention can meet the requirements for the uncovering and recycling of the spent fuel assemblies in the spent fuel reprocessing plant, and realize the safe recycling of the spent fuel assemblies in the reprocessing plant, which is convenient for the safe recycling and utilization of the spent fuel assemblies in weld sealed storage tanks.

### BRIEF DESCRIPTION OF THE DRAWINGS

In order to illustrate the technical solutions of the embodiments of the present invention more clearly, the embodiments of the present invention will now be briefly introduced in view of the accompanying drawings used. Obviously, the accompanying drawings only show some embodiments of the present invention. For one ordinary skilled in the art, other drawings can also be obtained without creative effort based on these drawings.
Fig. 1 is a schematic structural diagram of a spent fuel assembly uncovering and recycling system according to a first embodiment of the present invention;
Fig. 2 is a schematic structural diagram of a helium leakage and cladding damage detection assembly in the spent fuel assembly uncovering and recycling system according to the first embodiment of the present invention;
Fig. 3 is a schematic structural diagram of a water filling and exhausting assembly in the spent fuel assembly uncovering and recycling system according to the first embodiment of the present invention;
Fig. 4 is a schematic structural diagram of a spent fuel storage tank in a spent fuel assembly uncovering and recycling method according to a second embodiment of the present invention;
Fig. 5 is a flowchart of a spent fuel assembly uncovering and recycling method according to a second embodiment of the present invention;
Fig. 6 is a flow chart of Step 1 in Fig. 5;
Fig. 7 is a flow chart of Step 11 in Fig. 6;
Fig. 8 is a flow chart of Step 12 in Fig. 6;
Fig. 9 is a flow chart of Step 13 in Fig. 6; and
Fig. 10 is a flowchart of Step 14 in Fig. 6.

### DETAILED DESCRIPTION OF THE INVENTION

In order to solve the problem in the prior art that there is no technical solution for uncovering and recycling spent fuel assemblies, the present invention provides a spent fuel assembly uncovering and recycling system and method. The core idea of the present invention is: comprehensively consider the the inner cover weld joint, air hole cover weld joint, drainage hole cover weld joint, leakage of the thread sealing surface of the inflatable hole quick connector and the threaded sealing surface of the drainage hole quick connector, as well as the damage of the spent fuel assembly, give a safe and reliable solution for uncovering and recycling spent fuel assembly. During the short-term operation, loading, transfer and long-term storage of the spent fuel, if equipment failure, human-related events or other events cause the cladding temperature to exceed the safety benchmark, the storage tank can be safely cut to recycle the spent fuel assemblies. The spent fuel assembly uncovering and recycling system and method of the present invention can meet the requirements for the uncovering and recycling of the spent fuel assemblies in the spent fuel reprocessing plant, and realize the safe recycling of the spent fuel assemblies in the reprocessing plant, which is convenient for the safe recycling and utilization of the spent fuel assemblies in weld sealed storage tanks.

In order to make the objects, technical solutions and advantages of the present invention clearer, the embodiments of the present invention will be further described in detail below with reference to the accompanying drawings.

### The First embodiment

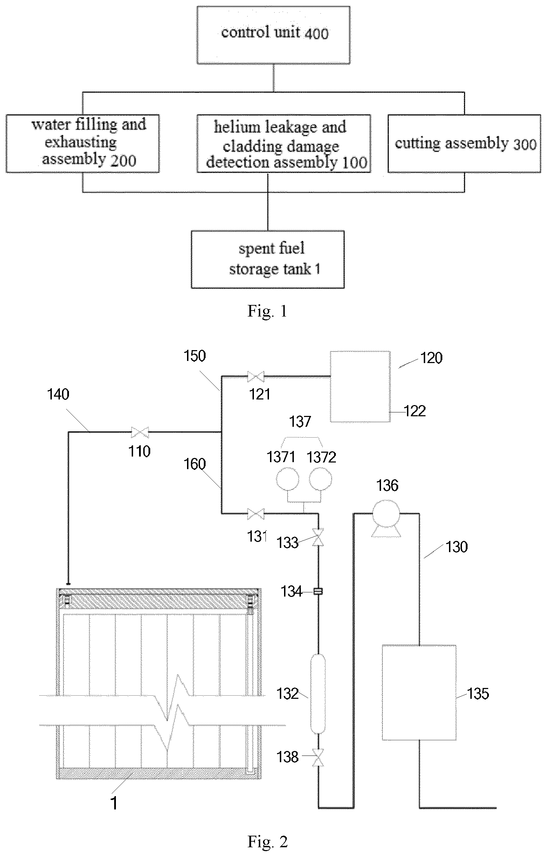

Referring to Fig. 1, a first embodiment of the present invention provides a spent fuel assembly uncovering and recycling system, which is suitable for a spent fuel storage tank storing a spent fuel assembly, wherein the spent fuel storage tank is a weld sealed spent fuel storage tank. The spent fuel assembly uncovering and recycling system includes:
a helium leakage and cladding damage detection assembly 100, connected to the spent fuel storage tank 1, for controllably detecting a weld joint sealing condition of a cover assembly of the spent fuel storage tank 1 and a cladding damage condition of the spent fuel assembly in the spent fuel storage tank 1, respectively;
a water filling and exhausting assembly 200, connected to the spent fuel storage tank 1, for controllably injecting water into the spent fuel assembly for cooling and exhausting gas in the spent fuel storage tank 1; and
a cutting assembly 300, for controllably cutting a cover assembly weld joint of the spent fuel storage tank 1 to recycle the spent fuel assembly in the spent fuel storage tank 1.

Due to the arrangement of the helium leakage and cladding damage detection assembly 100, the spent fuel storage tank 1 can be detected during the short-term operation, loading, transfer and long-term storage of spent fuel. Due to the arrangement of the water filling and exhausting assembly 200, the spent fuel cladding temperature can be prevented from exceeding safe benchmark, thereby improving the safety of spent fuel recycling. The welding seam of the cover assembly is cut by the cutting assembly 300, so as to recycle the spent fuel assembly, and improve the recycle efficiency of the spent fuel assembly in the spent fuel storage tank 1.

Further, the spent fuel assembly uncovering and recycling system includes: a control unit 400, connected to the helium leakage and cladding damage detection assembly 100, the water filling and exhausting assembly 200 and the cutting assembly 300 respectivelly, for controlling opening and closing of the helium leakage and cladding damage detection assembly 100, the water filling and exhausting assembly 200 and the cutting assembly 300, improving the controllability and automation of the spent fuel assembly uncovering and recycling system, as well as ensuring the accuracy of detection and the efficiency of recycling.

Further, as shown in Fig. 2, the the helium leakage and cladding damage detection assembly 100 includes:
a main detection pipeline 140, a first detection pipeline 150 and a second detection pipeline 160. One end of the main detection pipeline 140 is connected to the spent fuel storage tank 1, the other end of the main detection pipeline 140 is connected to the first detection pipeline 150 and the second detection pipeline 160, resepectively. The main detection pipeline 140, the first detection pipeline 150 and the second detection pipeline 160 are configured for transferring leaked gas from the spent fuel storage tank 1. The main detection pipeline 140 is provided with a first valve 110, the first valve 110 is connected to the control unit 400 for opening and closing under the control of the control unit 400. The first detection pipeline 150 is provided with a helium leakage detection module 120 for detecting helium leakage of the spent fuel storage tank 1, to detect sealing performance of the cover assembly weld joint of the spent fuel storage tank 1. The second detection pipeline 160 is provided with a cladding damage detection module 130 for sampling the leaked gas from the spent fuel storage tank 1, to detect cladding damage of the spent fuel assembly.

It should be noted that, one end of the main detection pipeline 140 close to the spent fuel storage tank 1 is provided with a blocking cover (not shown), which is used to avoid gas leakage, and to prevent the gas from leaking into the environment, polluting the environment and causing harm to the human body. At the same time, the blocking cover can aslo improve the detection accuracy of the helium leak detection module 120.

Further, the helium leakage detection module 120 includes: a second valve 121 and a helium leakage detector 122 in communication with each other. One end of the second valve 121 away from the helium leakage detector 122 is communicated with the first valve 110 for controlling opending and closing of the first detection pipeline 150. The helium leakage detector 122 is connected to the other end of the second valve 121 to detect helium leakage from the spent fuel storage tank 1 and test the sealing performance of the cover assembly weld joint of the spent fuel storage tank 1. The control unit 400 is connected to the second valve 121 and the helium leakage detector 122 for controlling opening and closing of the second valve 121 and the helium leakage detector 122, as well as realizing remote opening and closing of the second valve 121 and the helium leakage detector 122, thereby improving the safety of the staff member.

Further, the cladding damage detection module 130 includes a third valve 131 and a cladding damage sampling cartridge 132 in communication with each other. One end of the third valve 131 away from the cladding damage sampling cartridge 132 is communicated with the first valve 110 to control opending and closing of the cladding damage sampling cartridge 132. The cladding damage sampling cartridge 132 is connected to the other end of the third valve 131 for sampling the gas leaked from the spent fuel storage tank 1 and detecting the cladding damage of the spent fuel assembly. The control unit 400 is connected to the third valve 131 and the cladding damage sampling cartridge 132, to control opening and closing of the third valve 131 and the cladding damage sampling cartridge 132.

Further, the cladding damage detection module 130 includes: a fourth valve 133, a quick connector 134, a fifth valve 138 and a high efficiency adsorption filter 135. The fourth valve 133 and the quick connector 134 are sequentially connected between the third valve 131 and the cladding damage sampling cartridge 132, to control quick disconnection of the cladding damage sampling cartridge 132 after sampling. The fifth valve 138 is connected between the cladding damage sampling cartridge 132 and the high efficiency adsorption filter 135, to control a flow of gas in the cladding damage sampling cartridge 132. The high efficiency adsorption filter 135 is configured for connecting with one end of the quick connector 134 afar from the fourth valve 133 after the cladding damage sampling cartridge 132 detects that the spent fuel assembly cladding is damaged, to purify gas leaked from the test hole. In this manner, the quick connector 134 is first connected with the cladding damage sampling cartridge 132, for sampling the gas in the test hole and detecting the shadding. After shadding damage is detected, the quick connector 134 turns to connect with the high efficiency adsorption filter 135. In addition, the control unit 400 is connected with the fourth valve 133, the quick connector 134, the fifth valve 138 and the high efficiency adsorption filter 135, for controlling opening and closing of the fourth valve 133, the quick connector 134, the fifth valve 138 and the high efficiency adsorption filter 135.

Further, the cladding damage detection module 130 includes a vacuum pump 136, a pressure detector 137 and a fifth valve 138. The vacuum pump 136 is connected between the cladding damage sampling cartridge 132 and the high efficiency adsorption filter 135, for sampling gas in the second detection pipeline 160. The pressure detector 137 is connected between the third valve 131 and the fourth valve 133, for detecting whether the second detection pipeline 160 is under negative pressure. If the second detection pipeline 160 is under negative pressure, the gas in the test hole can enter the cladding damage sampling cartridge 132 smoothly. If the econd detection pipeline 160 is not under negative pressure, the gas in the test hole cannot enter the cladding damage sampling cartridge 132 smoothly. Due to the arrangement of the vacuum pump, the gas in the test hole can automatically enter the cladding damage sampling cartridge 132, thereby reducing manual operation and improving the automation level. Further, the control unit 400 is connected with the vacuum pump 136 and the pressure detector 137, for controlling opening and closing of the vacuum pump 136 and the pressure detector 137, to further improve the automation level of the recycling system.

It should be noted that, the pressure detector 137 may include a first pressure detector 1371 and a second pressure detector 1372 connected in parallel. By arranging two pressure detectors, the reliability of the pressure monitor 137 can be improved, to avoid inaccurate judgment of the operator due to the damage of the instruments.

In the first embodiment of the presnet invention, after the main detection pipeline 140 is connected with the spent fuel storage tank 1 , industrial adhesives or other adhesive materials are used to temporarily block the main detection pipeline 140, to improve the connection stability between the main detection pipeline 140 and the spent fuel storage tank 1 and ensure the reliability and accuracy of the test results.

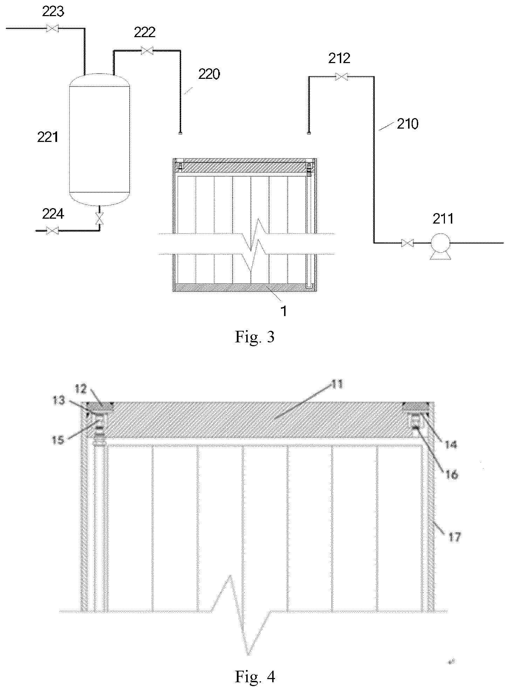

Further, referring to Figs. 3 and 4, the water filling and exhausting assembly 200 includes a water filling module 210 and exhausting module 220. The water filling module 210 includes a water pump 211 and a sixth valve 212. Two ends of the sixth valve 212 are respectively connected to the water pump 211 is communicated with the drainage hole quick connector 15 of the spent fuel storage tank 1. One end of the water pump 211 away from the sixth valve 212 is communicated with the boron-containing water source for injecting boron-containing water into the spent fuel storage tank 1. The control unit 400 is connected to the water pump 211 and the sixth valve 212, to control the opening and closing of the water pump 211 and the sixth valve 212. It should be noted that, a seventh valve can also be set between the water pump 211 and the sixth valve 212 for backup. When the sixth valve 212 is unavailable, the seventh valve is activated, to improve the applicability and reliability of the water filling module 210.

Further, the exhausting module 220 includes a condensation tank 221 and a suction pipeline valve 222. The condensation tank 221 is communicated with the inflatable hole quick connector 16 of the spent fuel storage tank 1 through the suction pipeline valve 222, so that the boron-containing water in the spent fuel storage tank 1 can be heated and flashed into water vapor, and be discharged quickly from the inflatable hole quick connector 16 and further be condensed through the condensation tank 221.

In the present embodiment, the exhausting module 220 further includes a first exhaust pipeline valvec 223 and a second exhaust pipeline valve 224. The first exhaust pipeline valve 223 communicates with the top of the condensation tank 221, and the second exhaust pipeline valv 224 communicates with the bottom of the condensation tank 221. The water vapor discharged from the inflatable hole quick connector 16 enters the condensation tank 221 through the suction pipeline valve 222, and is condensed and converted into water vapor. Part of the water vapor is discharged from the top of the condensation tank 221 via the first exhaust pipeline valve 223. Part of the water vapor is discharged from is discharged from the bottom of the condensation tank via the second exhaust pipeline valve 224. The control unit 400 is connected with the condensation tank 221, the suction pipeline valve 222, the first exhaust pipeline valve 223 and the second exhaust pipeline valve 224 for controlling the opening and closing of the condensation tank 221, the suction pipeline valve 222, the first exhaust pipeline valve 223 and the second exhaust pipeline valve 224.

Due to the arrangement of the water filling module 210, the problem of exceeding the safe temperature due to high temperature caused by the spent fuel assembly loaded inside the spent fuel storage tank 1 can be reduced. Due to the arrangement of the exhausting module 220, the problem of excessively high air pressure in the spent fuel storage tank 1 is further avoided, thereby further ensuring the stability and safety of the spent fuel storage tank 1.

It should be further noted that, the cutting assembly 300 may include a cutting unit and a hoisting unit (not shown), wherein the cutting unit is used to cut the welding seam of the cover assembly, and the hoisting unit is used to remove the cut structure after the cutting unit completes the cutting. The structures of the cutting unit and the hoisting unit are basically the same as those of the known cutting unit and the hoisting unit, and the specific structures are not repeated here.

### The Second embodiment

The present invention provides a spent fuel assembly uncovering and recycling method for the spent fuel assembly uncovering and recycling system of the first embodiment of the present invention, which is suitable for a spent fuel storage tank 1 storing spent fuel assemblies. As shown in Fig. 4 , the spent fuel storage tank 1 includes : an outer cover 11, an inner cover 12, a drainage hole cover 13, an air hole cover 14, a drainage hole quick connector 15, an inflatable hole quick connector 16 and a cylinder 17, and the cylinder 17 is installed with spent fuel assemblies. The outer cover 11 and the inner cover 12 are welded with the cylinder 17 to form an outer cover weld and an inner cover weld. The drainage hole cover 13 and the air hole cover 14 are welded to the inner cover 11, to form the welding seam of the air hole cover 14 and the welding seam of the drainage hole cover 13. The drainage hole quick connector 15 and the inflatable hole quick connector 16 are respectively screwed with the drain pipe and the inflatable pipe, to form the air hole quick joint thread sealing surface and the drainage hole quick connector thread sealing surface.

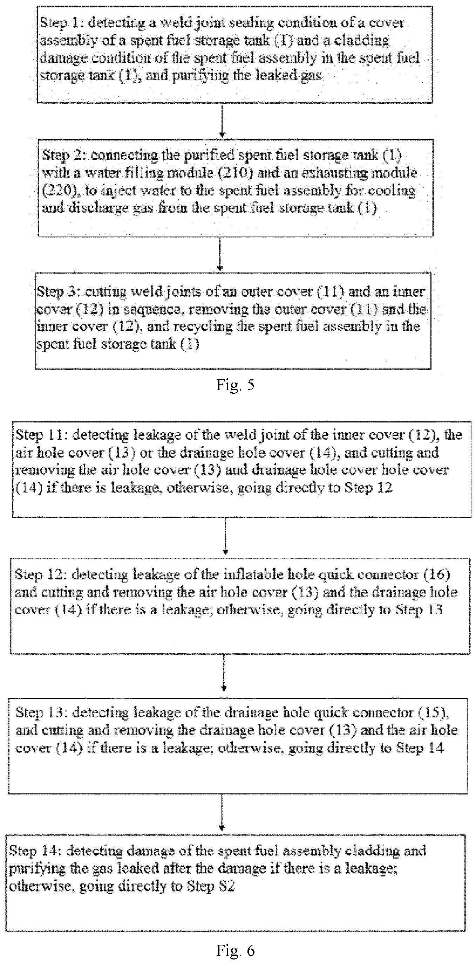

As shown in Fig. 5, the spent fuel assembly uncovering and recycling method includes the following steps:
Step 1: detecting a weld joint sealing condition of a cover assembly of a spent fuel storage tank 1 and a cladding damage condition of the spent fuel assembly in the spent fuel storage tank 1, and purifying the leaked gas;
Step 2: connecting the purified spent fuel storage tank 1 with a water filling module 210 and an exhausting module 220, to inject water to the spent fuel assembly for cooling and discharge gas from the spent fuel storage tank 1; and
Step 3: cutting weld joints of an outer cover 11 and an inner cover 12 in sequence, removing the outer cover 11 and the inner cover 12, and recycling the spent fuel assembly in the spent fuel storage tank 1.

The present embodiment comprehensively considers the sealing surfaces of various layers that may affect the sealing integrity of the storage equipment during the recycling process, and considers the impact of the dangerous fission gas released by the damaged cladding of the spent fuel assembly on the human body, to meet the requirements for the recycling and utilization of spent fuel assemblies, the safe recovery of spent fuel assemblies in the reprocessing plant is realized, which is convenient for the safe recycling and utilization of spent fuel assemblies inside the storage tanks.

Further, as shown in Fig. 6, Step 1 includes:
Step 11: detecting leakage of the weld joint of the inner cover 12, the air hole cover 13 or the drainage hole cover 14, and cutting and removing the air hole cover 13 and drainage hole cover hole cover 14 if there is leakage, otherwise, going directly to Step 12;
Step 12: detecting leakage of the inflatable hole quick connector 16 and cutting and removing the air hole cover 13 and the drainage hole cover 14 if there is a leakage; otherwise, going directly to Step 13;
Step 13: detecting leakage of the drainage hole quick connector 15, and cutting and removing the drainage hole cover 13 and the air hole cover 14 if there is a leakage; otherwise, going directly to Step 14; and
Step 14: detecting damage of the spent fuel assembly cladding and purifying the gas leaked after the damage if there is a leakage; otherwise, going directly to Step S2. Via detecting the damage of the spent fuel assembly cladding, the harmful gas after damage is prevented from entering the environment and further harming the environment and human body.

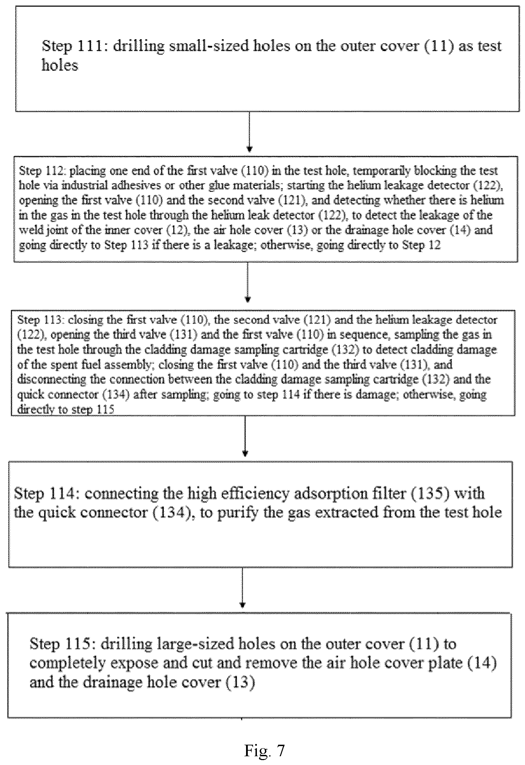

Further, referring to Fig. 7, Step 11 may further include:
Step 111: drilling small-sized holes on the outer cover 11 as test holes. The small-sized holes can meet the requirements of the test and cannot destroy the overall structure.
Step 112: placing one end of the first valve (110) in the test hole, temporarily blocking the test hole via industrial adhesives or other glue materials; starting the helium leakage detector 122, opening the first valve 110 and the second valve 121, and detecting whether there is helium in the gas in the test hole through the helium leak detector 122, to detect the leakage of the weld joint of the inner cover 12, the air hole cover 13 or the drainage hole cover 14 and going directly to Step 113 if there is a leakage; otherwise, going directly to Step 12. The use of the industrial adhesives or other glue materials for temporary bloking can further ensure the reliability and accuracy of the test.
Step 113: closing the first valve 110, the second valve 121 and the helium leakage detector 122, opening the third valve 131 and the first valve 110 in sequence, sampling the gas in the test hole through the cladding damage sampling cartridge 132 to detect cladding damage of the spent fuel assembly; closing the first valve 110 and the third valve 131, and disconnecting the connection between the cladding damage sampling cartridge 132 and the quick connector 134 after sampling; going to step 114 if there is damage; otherwise, going directly to step 115;
Step 114: connecting the high efficiency adsorption filter 135 with the quick connector 134, to purify the gas extracted from the test hole;
Step 115: drilling large-sized holes on the outer cover 11 to completely expose and cut and remove the air hole cover plate 14 and the drainage hole cover 13. With this arrangement, before cutting and removing the air hole cover 14 and the drainage hole cover 13, first drill holes in the inflatable hole position and the drainage hole position of the outer cover 11 of the fuel storage tank, so that the air hole cover 14 and the drainage hole cover 13 is easy to cut and remove, so as to prevent other structures from being affected.

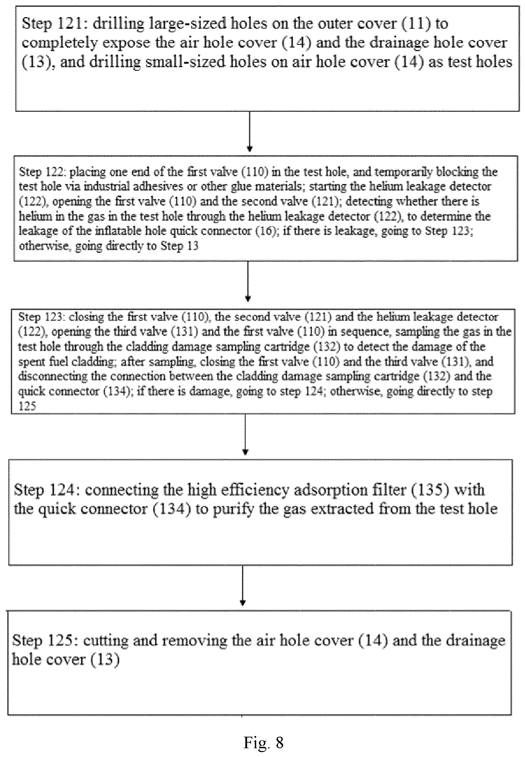

Further, referring to Fig. 8, Step 12 may further include:
Step 121: drilling small-sized holes on the outer cover 11, and drilling holes on air hole cover 14 as test holes;
Step 122: placing one end of the first valve 110 in the test hole, and temporarily blocking the test hole via industrial adhesives or other glue materials; starting the helium leakage detector 122, opening the first valve 110 and the second valve 121; detecting whether there is helium in the gas in the test hole through the helium leakage detector 122, to determine the leakage of the inflatable hole quick connector 16; if there is leakage, going to Step 123; otherwise, going directly to Step 13;
Step 123: closing the first valve 110, the second valve 121 and the helium leakage detector 122, opening the third valve 131 and the first valve 110 in sequence, sampling the gas in the test hole through the cladding damage sampling cartridge 132 to detect the damage of the spent fuel cladding; after sampling, closing the first valve 110 and the third valve 131, and disconnecting the connection between the cladding damage sampling cartridge 132 and the quick connector 134; if there is damage, going to step 124; otherwise, going directly to step 125;
Step 124: connecting the high efficiency adsorption filter 135 with the quick connector 134 to purify the gas extracted from the test hole; and
Step 125: cutting and removing the air hole cover 14 and the drainage hole cover 13.

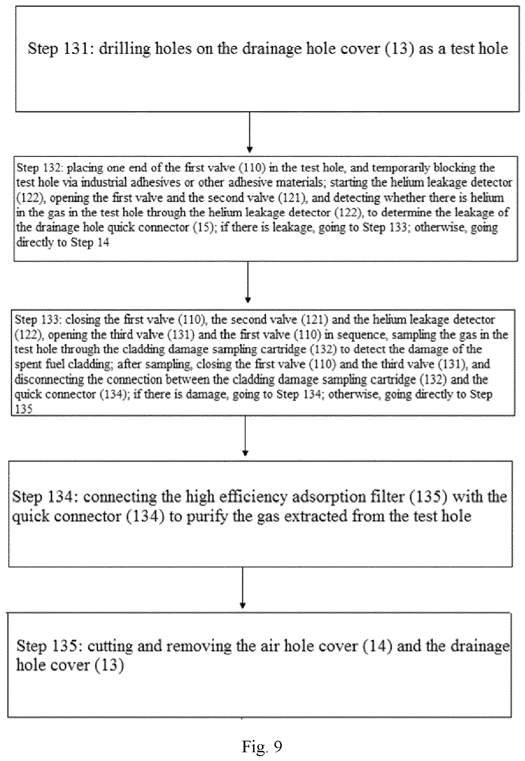

Further, referring to Fig. 9, step 13 may further include:
Step 131: drilling holes on the drainage hole cover 13 as a test hole;
Step 132: placing one end of the first valve 110 in the test hole, and temporarily blocking the test hole via industrial adhesives or other adhesive materials; starting the helium leakage detector 122, opening the first valve and the second valve 121, and detecting whether there is helium in the gas in the test hole through the helium leakage detector 122, to determine the leakage of the drainage hole quick connector 15; if there is leakage, going to Step 133; otherwise, going directly to Step 14;
Step 133: closing the first valve 110, the second valve 121 and the helium leakage detector 122, opening the third valve 131 and the first valve 110 in sequence, sampling the gas in the test hole through the cladding damage sampling cartridge 132 to detect the damage of the spent fuel cladding; after sampling, closing the first valve 110 and the third valve 131, and disconnecting the connection between the cladding damage sampling cartridge 132 and the quick connector 134; if there is damage, going to Step 134; otherwise, going directly to Step 135;
Step 134: connecting the high efficiency adsorption filter 135 with the quick connector 134 to purify the gas extracted from the test hole; and
Step 135: cutting and removing the air hole cover 14 and the drainage hole cover 13.

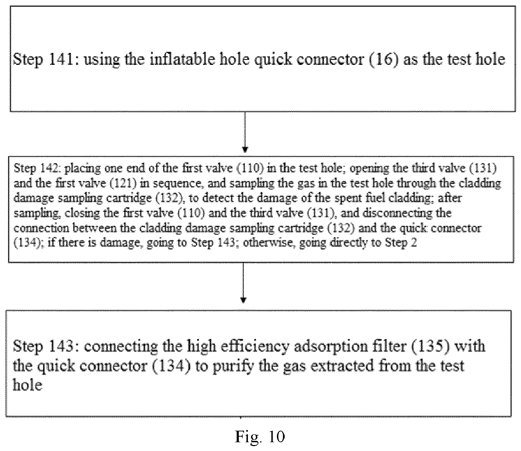

Further, referring to Fig. 10, Step 14 may further include:
Step 141: using the inflatable hole quick connector 16 as the test hole;
Step 142: placing one end of the first valve 110 in the test hole; opening the third valve 131 and the first valve 121 in sequence, and sampling the gas in the test hole through the cladding damage sampling cartridge 132, to detect the damage of the spent fuel cladding; after sampling, closing the first valve 110 and the third valve 131, and disconnecting the connection between the cladding damage sampling cartridge 132 and the quick connector 134; if there is damage, going to Step 143; otherwise, going directly to Step 2; and
Step 143: connecting the high efficiency adsorption filter 135 with the quick connector 134 to purify the gas extracted from the test hole. If there is no leakage in the spent fuel storage tank 1, detecting the damage of the spent fuel assembly cladding can improve the safety of the spent fuel assembly recycling and avoid human events.

Specifically, Step 2 includes: connecting the water filling module 210 with the drainage hole quick connector 15 to ineject boron-containing water into the spent fuel storage tank 1; connecting the exhausting module 220 with the inflatable hole quick connector 16, to make the boron-containing water in the spent fuel storage tank 1 heated and flashed into water vapor and further condensed and discharged from the inflatable hole quick connector 16, thereby avoiding accidents cased by the temperature of the spent fuel assembly exceeding the safety benchmark.

It should be noted that, before performing the above steps, it is first necessary to confirm that the first valve 110, the second valve 121, the third valve 131, the fourth valve 133 and the fifth valve 138 are in a closed state.

Summarizing the above, the present invention comprehensively considers the the inner cover weld joint, air hole cover weld joint, drainage hole cover weld joint, leakage of the thread sealing surface of the inflatable hole quick connector and the threaded sealing surface of the drainage hole quick connector, as well as the damage of the spent fuel assembly, give a safe and reliable solution for uncovering and recycling spent fuel assembly. During the short-term operation, loading, transfer and long-term storage of the spent fuel, if equipment failure, human-related events or other events cause the cladding temperature to exceed the safety benchmark, the storage tank can be safely cut to recycle the spent fuel assemblies. The spent fuel assembly uncovering and recycling system and method of the present invention can meet the requirements for the uncovering and recycling of the spent fuel assemblies in the spent fuel reprocessing plant, and realize the safe recycling of the spent fuel assemblies in the reprocessing plant, which is convenient for the safe recycling and utilization of the spent fuel assemblies in weld sealed storage tanks.

The above described embodiments are only preferred embodiments of the present invention, and are not intended to limit the scope of the present invention. Any modification, equivalent replacement and improvement within the spirit and principle of the present invention should be included in the protection scope of the present invention.

## Claims

1. A spent fuel assembly uncovering and recycling system, suitable for a spent fuel storage tank (1) storing a spent fuel assembly, **characterized in that**, the spent fuel assembly uncovering and recycling system comprises:
a helium leakage and cladding damage detection assembly (100), connected to the spent fuel storage tank (1), for controllably detecting a weld joint sealing condition of a cover assembly of the spent fuel storage tank (1) and a cladding damage condition of the spent fuel assembly in the spent fuel storage tank (1), respectively;
a water filling and exhausting assembly (200), connected to the spent fuel storage tank (1), for controllably injecting water into the spent fuel assembly for cooling and exhausting gas in the spent fuel storage tank (1); and
a cutting assembly (300), for controllably cutting a cover assembly weld joint of the spent fuel storage tank (1) to recycle the spent fuel assembly in the spent fuel storage tank (1).

2. The spent fuel assembly uncovering and recycling system according to claim 1, **characterized in that**, the spent fuel assembly uncovering and recycling system further comprises: a control unit (400), connected to the helium leakage and cladding damage detection assembly (100), the water filling and exhausting assembly (200) and the cutting assembly (300) respectivelly, for controlling opening and closing of the helium leakage and cladding damage detection assembly (100), the water filling and exhausting assembly (200) and the cutting assembly (300).

3. The spent fuel assembly uncovering and recycling system according to claim 2, **characterized in that**, the helium leakage and cladding damage detection assembly (100) comprises a main detection pipeline (140), a first detection pipeline (150) and a second detection pipeline (160), one end of the main detection pipeline (140) is connected to the spent fuel storage tank (1), the other end of the main detection pipeline (140) is connected to the first detection pipeline (150) and the second detection pipeline (160), resepectively, the main detection pipeline (140), the first detection pipeline (150) and the second detection pipeline (160) are configured for transferring leaked gas from the spent fuel storage tank ( 1);
the main detection pipeline (140) is provided with a first valve (110), the first valve (110) is connected to the control unit (400) for opening and closing under the control of the control unit (400); the first detection pipeline (150) is provided with a helium leakage detection module (120) for detecting helium leakage of the spent fuel storage tank (1), to detect sealing performance of the cover assembly weld joint of the spent fuel storage tank (1); the second detection pipeline (160) is provided with a cladding damage detection module (130) for sampling the leaked gas from the spent fuel storage tank (1), to detect cladding damage of the spent fuel assembly.

4. The spent fuel assembly uncovering and recycling system according to claim 3, **characterized in that**, one end of the main detection pipeline (140) close to the spent fuel storage tank (1) is provided with a blocking cover.

5. The spent fuel assembly uncovering and recycling system according to claim 4, **characterized in that**, the helium leakage detection module (120) comprises: a second valve (121) and a helium leakage detector (122) in communication with each other; one end of the second valve (121) is communicated with the first valve (110) for controlling opending and closing of the first detection pipeline (150); the helium leakage detector (122) is connected to the other end of the second valve (121) to detect helium leakage from the spent fuel storage tank (1) and test the sealing performance of the cover assembly weld joint of the spent fuel storage tank (1); the control unit (400) is connected to the second valve (121) and the helium leakage detector (122) for controlling opening and closing of the second valve (121) and the helium leakage detector (122).

6. The spent fuel assembly uncovering and recycling system according to claim 5, **characterized in that**, the cladding damage detection module (130) comprises a third valve (131) and a cladding damage sampling cartridge (132) in communication with each other, one end of the third valve (131) is communicated with the first valve (110) to control opending and closing of the second detection pipeline (160); the cladding damage sampling cartridge (132) is connected to the other end of the third valve (131) for sampling the gas leaked from the spent fuel storage tank (1) and detecting the cladding damage of the spent fuel assembly; the control unit (400) is connected to the third valve ( 131 ) and the cladding damage sampling cartridge (132), to control opening and closing of the third valve (131) and the cladding damage sampling cartridge (132).

7. The spent fuel assembly uncovering and recycling system according to claim 6, **characterized in that**, the cladding damage detection module (130) further comprises: a fourth valve (133), a quick connector (134), a fifth valve (138) and a high efficiency adsorption filter (135);
the fourth valve (133) and the quick connector (134) are sequentially connected between the third valve (131) and the cladding damage sampling cartridge (132), to control quick disconnection of the cladding damage sampling cartridge (132) after sampling;
the fifth valve (138) is connected between the cladding damage sampling cartridge (132) and the high efficiency adsorption filter (135), to control a flow of gas in the cladding damage sampling cartridge (132);
the high efficiency adsorption filter (135) is configured for connecting with one end of the quick connector (134) afar from the fourth valve (133) after the cladding damage sampling cartridge (132) detects that the spent fuel shadding is damaged, to purify gas leaked from the spent fuel storage tank (1); and
the control unit (400) is connected with the fourth valve (133), the quick connector (134), the fifth valve (138) and the high efficiency adsorption filter (135), for controlling opening and closing of the fourth valve (133), the quick connector (134), the fifth valve (138) and the high efficiency adsorption filter (135).

8. The spent fuel assembly uncovering and recycling system according to claim 7, **characterized in that**, the cladding damage detection module (130) further comprises a vacuum pump (136) and a pressure detector (137),
the vacuum pump (136) is connected between the cladding damage sampling cartridge (132) and the high efficiency adsorption filter (135), for sampling gas in the second detection pipeline (160);
the pressure detector (137) is connected between the third valve (131) and the fourth valve (133), for detecting a pressure state of the second detection pipeline (160); and
the control unit (400) is connected with the vacuum pump (136) and the pressure detector (137), for controlling opening and closing of the vacuum pump (136) and the pressure detector (137).

9. The spent fuel assembly uncovering and recycling system according to claim 2, **characterized in that**, the water filling and exhausting assembly (200) comprises a water filling module (210) and an exhausting module (220), the water filling module (210) is connected to the spent fuel storage tank (1) to inject boron-containing water into the spent fuel storage tank (1); the exhausting module (220) is connected to the spent fuel storage tank (1), to make the boron-containing water in the spent fuel storage tank (1) flash evaporated into water vapor after being heated to be exhausted.

10. The spent fuel assembly uncovering and recycling system according to claim 9, **characterized in that**, the water filling module (210) comprises a water pump (211) and a sixth valve (212); two ends of the sixth valve (212) ) are respectively communicated with the water pump (211) and the drainage hole quick connector (15); one end of the water pump (211) afar from the sixth valve (212) is communicated with the boron-containing water source to inject boron-containing water into the spent fuel storage tank (1); the control unit (400) is connected to the water pump (211) and the sixth valve (212), to control opening and closing the of the water pump (211) and the sixth valve (212).

11. The spent fuel assembly uncovering and recycling system according to claim 10, **characterized in that**, the exhausting module (220) comprises a condensation tank (221), a suction pipeline valve (222), a first exhaust pipeline valve (223) and a second exhaust pipeline valve (224); the first exhaust pipeline valve (223) communicates with a top of the condensation tank (221), the second exhaust pipeline valve (224) communicates with a bottom of the condensation tank tank (221), and the condensation tank (221) is communicated with an inflatable hole quick connector (16) through the suction pipeline valve (222), so that the boron-containing water in the spent fuel storage tank (1) is heated and flashed into water vapor and further discharged to the condensation tank (221), and part of the water vapor condensed by the condensation tank (221) is discharged from the top of the condensation tank (221) through the first exhaust pipeline valve (223), and the other part of the water vapor condensed by the condensation tank (221) is discharged from the bottom of the condensation tank (221) through the second exhaust pipeline valve (224); the control unit (400) is connected with the condensation tank (221), the suction pipeline valve (222), the first exhaust pipeline valve (223) and the second exhaust pipeline valve (224) for controlling opening and closing of the condensation tank (221), the suction pipeline valve (222), the first exhaust pipeline valve (223) and the second exhaust pipeline valve (224).

12. A spent fuel assembly uncovering and recycling method, comprising the steps of:
Step 1: detecting a weld joint sealing condition of a cover assembly of a spent fuel storage tank (1) and a cladding damage condition of the spent fuel assembly in the spent fuel storage tank (1), and purifying the leaked gas;
Step 2: connecting the purified spent fuel storage tank (1) with a water filling module (210) and an exhausting module (220), to inject water to the spent fuel assembly for cooling and discharge gas from the spent fuel storage tank (1); and
Step 3: cutting weld joints of an outer cover (11) and an inner cover (12) in sequence, removing the outer cover (11) and the inner cover (12), and recycling the spent fuel assembly in the spent fuel storage tank (1).

13. The spent fuel assembly uncovering and recycling method according to claim 12, **characterized in that**, Step 1 comprises the steps of:
Step 11: detecting leakage of the weld joint of the inner cover (12), the air hole cover (13) or the drainage hole cover (14), and cutting and removing the air hole cover (13) and drainage hole cover hole cover (14) if there is leakage, otherwise, going directly to Step 12;
Step 12: detecting leakage of the inflatable hole quick connector (16) and cutting and removing the air hole cover (13) and the drainage hole cover (14) if there is a leakage; otherwise, going directly to Step 13;
Step 13: detecting leakage of the drainage hole quick connector (15), and cutting and removing the drainage hole cover (13) and the air hole cover (14) if there is a leakage; otherwise, going directly to Step 14; and
Step 14: detecting damage of the spent fuel assembly cladding and purifying the gas leaked after the damage if there is a leakage; otherwise, going directly to Step S2.

14. The spent fuel assembly uncovering and recycling method according to claim 13, **characterized in that**, Step 11 comprises:
Step 111: drilling small-sized holes on the outer cover (11) as test holes;
Step 112: placing one end of the first valve (110) in the test hole, temporarily blocking the test hole via industrial adhesives or other glue materials; starting the helium leakage detector (122), opening the first valve (110) and the second valve (121), and detecting whether there is helium in the gas in the test hole through the helium leak detector (122), to detect the leakage of the weld joint of the inner cover (12), the air hole cover (13) or the drainage hole cover (14) and going directly to Step 113 if there is a leakage; otherwise, going directly to Step 12;
Step 113: closing the first valve (110), the second valve (121) and the helium leakage detector (122), opening the third valve (131) and the first valve (110) in sequence, sampling the gas in the test hole through the cladding damage sampling cartridge (132) to detect cladding damage of the spent fuel assembly; closing the first valve (110) and the third valve (131), and disconnecting the connection between the cladding damage sampling cartridge (132) and the quick connector (134) after sampling; going to step 114 if there is damage; otherwise, going directly to step 115;
Step 114: connecting the high efficiency adsorption filter (135) with the quick connector (134), to purify the gas extracted from the test hole;
Step 115: drilling large-sized holes on the outer cover (11) to completely expose and cut and remove the air hole cover plate (14) and the drainage hole cover (13).

15. The spent fuel assembly uncovering and recycling method according to claim 14, **characterized in that**, Step 12 comprises:
Step 121: drilling large-sized holes on the outer cover (11) to completely expose the air hole cover (14) and the drainage hole cover (13), and drilling small-sized holes on air hole cover (14) as test holes;
Step 122: placing one end of the first valve (110) in the test hole, and temporarily blocking the test hole via industrial adhesives or other glue materials; starting the helium leakage detector (122), opening the first valve (110) and the second valve (121); detecting whether there is helium in the gas in the test hole through the helium leakage detector (122), to determine the leakage of the inflatable hole quick connector (16); if there is leakage, going to Step 123; otherwise, going directly to Step 13;
Step 123: closing the first valve (110), the second valve (121) and the helium leakage detector (122), opening the third valve (131) and the first valve (110) in sequence, sampling the gas in the test hole through the cladding damage sampling cartridge (132) to detect the damage of the spent fuel cladding; after sampling, closing the first valve (110) and the third valve (131), and disconnecting the connection between the cladding damage sampling cartridge (132) and the quick connector (134); if there is damage, going to step 124; otherwise, going directly to step 125;
Step 124: connecting the high efficiency adsorption filter (135) with the quick connector (134) to purify the gas extracted from the test hole; and
Step 125: cutting and removing the air hole cover (14) and the drainage hole cover (13).

16. The spent fuel assembly uncovering and recycling method according to claim 15, **characterized in that**, Step 13 comprises:
Step 131: drilling holes on the drainage hole cover (13) as a test hole;
Step 132: placing one end of the first valve (110) in the test hole, and temporarily blocking the test hole via industrial adhesives or other adhesive materials; starting the helium leakage detector (122), opening the first valve and the second valve (121), and detecting whether there is helium in the gas in the test hole through the helium leakage detector (122), to determine the leakage of the drainage hole quick connector (15); if there is leakage, going to Step 133; otherwise, going directly to Step 14;
Step 133: closing the first valve (110), the second valve (121) and the helium leakage detector (122), opening the third valve (131) and the first valve (110) in sequence, sampling the gas in the test hole through the cladding damage sampling cartridge (132) to detect the damage of the spent fuel cladding; after sampling, closing the first valve (110) and the third valve (131), and disconnecting the connection between the cladding damage sampling cartridge (132) and the quick connector (134); if there is damage, going to Step 134; otherwise, going directly to Step 135;
Step 134: connecting the high efficiency adsorption filter (135) with the quick connector (134) to purify the gas extracted from the test hole; and
Step 135: cutting and removing the air hole cover (14) and the drainage hole cover (13).

17. The spent fuel assembly uncovering and recycling method according to claim 16, **characterized in that**, Step 14 comprises:
Step 141: using the inflatable hole quick connector (16) as the test hole;
Step 142: placing one end of the first valve (110) in the test hole; opening the third valve (131) and the first valve (121) in sequence, and sampling the gas in the test hole through the cladding damage sampling cartridge (132), to detect the damage of the spent fuel cladding; after sampling, closing the first valve (110) and the third valve (131), and disconnecting the connection between the cladding damage sampling cartridge (132) and the quick connector (134); if there is damage, going to Step 143; otherwise, going directly to Step 2; and
Step 143: connecting the high efficiency adsorption filter (135) with the quick connector (134) to purify the gas extracted from the test hole.

18. The spent fuel assembly uncovering and recycling method according to claim 13, **characterized in that**, Step 2 comprising: connecting the water filling module (210) with the drainage hole quick connector (15) to ineject boron-containing water into the spent fuel storage tank (1); connecting the exhausting module (220) with the inflatable hole quick connector (16), to make the boron-containing water in the spent fuel storage tank (1) heated and flashed into water vapor and further condensed and discharged from the inflatable hole quick connector (16)..
